# EUROPÄISCHE PATENTSCHRIFT

(11) **EP 2 412 682 B1**
(45) Veröffentlichungstag und Bekanntmachung des Hinweises auf die Patenterteilung: **23.01.2019**
(21) Anmeldenummer: 10171230.5
(22) Anmeldetag: 29.07.2010
(51) Int. Cl.: C03B 23/03, C03B 23/035

(54) **Verfahren zum Biegen von Glasscheiben**
Method for bending glass panes
Procédé destiné au pliage de vitres

(43) Veröffentlichungstag der Anmeldung: 01.02.2012
(73) Patentinhaber: Saint-Gobain Glass France, 92400 Courbevoie (FR)
(72) Erfinder: Radermacher, Herbert, 4730 Raeren (BE)
(74) Vertreter: Lendvai, Tomas

(56) Entgegenhaltungen:
- EP-A1- 0 571 824
- DE-C1- 19 725 189
- JP-A- 10 152 333
- JP-A- 61 091 025
- JP-A- 61 270 228
- US-A- 4 813 993

## Beschreibung

Die Erfindung betrifft ein Verfahren zum Biegen von Glasscheiben, insbesondere zum Biegen von Glasscheiben für den Kraftfahrzeugbereich.

Glasscheiben für Kraftfahrzeuge, Gebäude oder sonstige Einrichtungen müssen häufig in eine bestimmte Form gebogen und aus Gründen der Sicherheit und Festigkeit vorgespannt werden. Die thermische Behandlung erfolgt in sogenannten Biege- und Vorspannöfen, wobei die Glasscheibe die Ofenstrecke typischerweise horizontal durchläuft.

Die Form der Glasscheibe kann mittels Schwerkraft, durch kinetische Energie beim Abwerfen auf einen Formring oder mittels Pressen der Glasscheibe zwischen einer Biegeform und einem Biegering erzeugt werden. Pressverfahren haben dabei den Vorteil, dass sie besonders schwierige und komplexe Biegeformen erlauben.

Verfahren und Vorrichtungen zum Pressen von Glasscheiben, insbesondere für die Verglasung von Kraftfahrzeugen, sind vielfältig bekannt. Beispiele für solche Verfahren und Vorrichtungen werden in EP 0 237 231 A1, DE 197 25 189 C1, EP 0 241 355 A1, EP 0 351 278 B1 und EP 1 042 240 B1 beschrieben.

Eine Biegevorrichtung nach dem Stand der Technik, wie sie in EP 0 241 355 B1 beschrieben wird, besteht beispielsweise aus einem Ofen, einer Biegekammer und einer in der Biegekammer heb- und senkbaren Biegeform. Die Glasscheibe wird in dem Ofen auf Biegetemperatur erwärmt und horizontal, beispielsweise über ein Rollenfördersystem, in die Biegekammer transportiert.

Die Glasscheibe wird durch einen Differenzgasdruck angehoben und an der Biegeform fixiert. Nach dem Anheben der Biegeform samt der Glasscheibe wird ein Biegering horizontal in die Biegekammer eingefahren. Anschließend wird die Glasscheibe durch Pressen zwischen Biegering und Biegeform sowie Ansaugen der Glasscheibe an die Biegeform geformt. Das Einfahren und Positionieren des Biegerings benötigt mehrere Sekunden und begrenzt damit die erreichbaren Taktzeiten.

Der Differenzgasdruck zum Anheben und Fixieren der Glasscheibe kann durch einen Unterdruck zwischen Glasscheibe und Biegeform erzeugt werden. Technisch einfacher zu realisieren ist ein von unten an die Glasscheibe anströmender Heißluftstrom, der die Glasscheibe anhebt. Der dazu notwendige Druck des Heißluftstroms beträgt etwa von 200 Pa bis 5000 Pa.

Die Verwendung eines Heißluftstroms zum Anheben der Glasscheibe benötigt ein Gebläse samt Heizung mit einer Leistung von 100 kW bis 400 kW. Neben dem beträchtlichen Energieverbrauch stellen Gebläse, Heizregister und Rohrsystem eine erhebliche Investition bei der Errichtung der Vorrichtung dar.

Weitere Vorrichtungen und Verfahren zum Biegen von Glasscheiben sind in JPS6191025 A, DE 19725189 C1, JPH10152333 A, JPS61270228 A, US 4813993 A und EP 0571824 A1 offenbart.

Bei einem anderen Verfahren befinden sich Aussparungen im Bereich des Rollenfördersystems, mit dem die Glasscheibe transportiert wird. In den Aussparungen unterhalb der Rollenoberkante befindet sich der Biegering. Der Biegering wird von unten kommend angehoben, er hebt die Glasscheibe an und presst sie gegen die Biegeform. Dieses Verfahren eignet sich für einfache Biegungen, beispielsweise zum Biegen von Seitenscheiben. Für komplexe Biegungen oder Glasscheiben mit höherer Querbiegung sind Biegeringe mit großen Aussparungen im Rollenfördersystem notwendig. Solche Aussparungen führen zu Problemen beim Transport der Glasscheibe und zu optischen Fehlern, wenn die Glasscheibe auf Biegetemperatur über die Aussparungen geführt wird. Bei einem Modellwechsel muss nicht nur der Biegering und die Biegeform ausgewechselt werden, sondern auch das Rollensystem mit den Aussparungen.

Die Aufgabe der vorliegenden Erfindung liegt darin, ein verbessertes Verfahren zum Biegen von Glasscheiben bereitzustellen, welches schnellere Taktzeiten sowie geringere Energiekosten und geringere Investitionskosten erfordert.

Die Aufgabe der vorliegenden Erfindung wird erfindungsgemäß durch ein Verfahren zum Biegen von Glasscheiben gemäß Anspruch 1 gelöst. Bevorzugte Ausführungen gehen aus den Unteransprüchen hervor.

Eine erfindungsgemäße Vorrichtung und deren Verwendung gehen aus weiteren Ansprüchen hervor.

Bei dem erfindungsgemäßen Verfahren zum Biegen von Glasscheiben wird in einem ersten Schritt (a) mindestens eine Glasscheibe, aufgeheizt auf eine Temperatur von 550 °C bis 680 °C, in einer Biegestation positioniert.

Die Glasscheiben sind beispielsweise aus Floatglas, Gussglas oder Keramikglas gefertigt. Die Dicken der Glasscheiben können breit variieren. Vorzugsweise werden Gläser mit den Standardglasstärken von 2, 3, 4, 5, 6, 8, 10, 12, 15, 19 und 25 mm verwendet. Das Verfahren eignet sich mit angepassten Biegetemperaturen auch zum Biegen von nichtgläsernen Materialien, beispielsweise Kunststoffen, insbesondere Polystyrol (PS), Polyamid (PA), Polyester (PE), Polyvinylchlorid (PVC), Polycarbonat (PC), Polymethylmethacrylat (PMA) oder Polyethylenterephtalat (PET).

Die Glasscheiben durchlaufen zur Erwärmung auf ihre Biegetemperatur eine Heizstrecke. Die Heizstrecke befindet sich vorzugsweise in einem Ofen, der der Biegestation vorangestellt ist. Innerhalb der Heizstrecke befinden sich bevorzugt an sich bekannte elektrische Widerstandsheizungen, die mittels Strahlungswärme und/oder Konvektion die Glasscheiben erhitzen. Andere Formen der Glasscheiben-Erhitzung sind ebenfalls möglich, etwa die mittels Gasbeheizung.

Die Biegestation wird vorzugsweise ebenfalls beheizt. Dadurch bleibt die Glasscheibe während des Biegevorgangs auf Biegetemperatur wodurch Beschädigungen der Glasscheibe durch Temperaturgradienten vermieden werden.

In einem zweiten Verfahrensschritt (b) wird die Glasscheibe mit einer Hebevorrichtung mit mindestens einer Auflagefläche durch einen geöffneten, mindestens zweifach geteilten Biegering hindurch gehoben.

Die Auflageflächen können als Auflageleisten oder beliebig geformte Flächen gestaltet sein. Sie können jeweils an die Größe und Form der zu biegenden Glasscheibe angepasst werden. Die gesamten Auflageflächen der Hebevorrichtung befinden sich unterhalb der Rollenoberkante und unterhalb der Glasscheibe. Außerdem sind die Auflageflächen mindestens um einen Abstand von 0,5 cm bis 20 cm, bevorzugt von 2 cm bis 10 cm, relativ zum äußeren Seitenrand der Glasscheibe nach Innen versetzt.

In einem dritten Verfahrensschritt (c) wird der Biegering geschlossen. Anschließend wird die Hebevorrichtung gesenkt, wobei die Glasscheibe von dem Biegering übernommen wird.

Die einzelnen Segmente des Biegerings können beispielsweise auf Gleitlagern gelagert sein. Die Segmente können beispielsweise durch Einzelantriebe oder durch einen gemeinsamen Stellantrieb über eine geeignete Hebelmechanik miteinander gekoppelt sein. Vorzugsweise werden die Segmente um Schwenkpunkte bewegt und beim Schließen des Biegerings zusammen bzw. beim Öffnen auseinander gefahren.

Der Weg, den die einzelnen Segmente in der einen oder anderen Richtung zurücklegen, kann verhältnismäßig kurz sein. Im Falle einer Glasscheibe mit der Größe einer üblichen Windschutzscheibe eines Personenkraftfahrzeugs von etwa 90 cm x 150 cm genügen Verstellwege der Segmente von wenigen Zentimetern, bevorzugt von 1 cm bis 30 cm, besonders bevorzugt von 1,5 cm bis 10 cm.

In einem vierten Verfahrensschritt (d) wird eine Biegeform abgesenkt und die Glasscheibe durch Ansaugen an die Biegeform sowie Pressen zwischen Biegering und Biegeform gebogen.

In einer bevorzugten Ausgestaltung des erfindungsgemäßen Verfahrens wird die Glasscheibe zunächst durch Ablegen auf den geschlossenen Biegering vorgebogen. Aufgrund der Schwerkraft kann sich die erweichte Glasscheibe der Form des Biegerings zumindest teilweise anpassen. Danach wird die Glasscheibe durch Pressen der Biegeform gegen den Biegering gebogen. Anschließend erfolgt die endgültige Formgebung durch Ansaugen der Glasscheibe an die Biegeform. Es ist auch möglich die Glasscheibe zuerst an die Biegeform anzusaugen und anschließend die Glasscheibe durch Pressen zwischen Biegering und Biegeform zu formen. Alternativ können beide Biegeschritte gleichzeitig erfolgen. Bei einfachen Biegegeometrien kann der Pressvorgang zwischen Biegering und Biegeform entfallen.

Der Unterdruck, der zum Ansaugen der Glasscheibe an die Biegeform notwendig ist, beträgt bevorzugt von 100 Pa bis 5000 Pa. Die Biegeform weist bevorzugt mehrere Ansaugkanäle auf. Durch die Ansaugkanäle wird die Luft abgesaugt, die sich zwischen Glasscheibe und Biegeform befindet. Dadurch kann sich die Glasscheibe optimal der Kontur der Biegeform anpassen.

Zum Ansaugen von mehr als einer Scheibe wird die sogenannte Schürzentechnik verwendet. Bei der Schürzentechnik werden Luftleitbleche außerhalb der Glasscheibenkontur, vorzugsweise in einem Abstand von 1cm bis 3 cm, an der Biegeform angebracht. Durch eine Saugwirkung im Randbereich wird eine Druckdifferenz erzielt, die dazu führt, dass die Scheiben gegen die Biegeform gedrückt werden.

Die obere Biegeform ist bevorzugt vollflächig ausgebildet und weist eine konvexe und/oder konkave Formgebung auf. Der Biegering ist passend auf die Biegeform abgestimmt. In einer weiteren bevorzugten Ausgestaltung ist die Biegeform rahmenförmig ausgebildet.

In einer bevorzugten Ausgestaltung des erfindungsgemäßen Verfahrens kann die Position der Scheibe relativ zum Biegering durch einen horizontalen Verschiebemechanismus, parallel zu den Transportrollen und nachdem die Gasscheibe von den Transportrollen abgehoben wurde, korrigiert werden. Ob eine Korrektur erforderlich ist, kann durch ein geeignetes Glaspositionsmessverfahren, beispielsweise mittels Staudüsen oder Lichtsensoren im Vorfeld ermittelt werden. Die Korrektur ermöglicht eine höhere Genauigkeit bei der Positionierung der Glasscheibe, als sie bei Hebeverfahren mittels eines Differenzgasdrucks oder eines eingelassenen Biegerings möglich ist.

In einer vorteilhaften Ausgestaltung des erfindungsgemäßen Verfahrens wird die Biegeform samt Glasscheibe nach dem Biegen angehoben. Anschließend wird ein Transportgestell in die Biegestation eingefahren. Die Glasscheibe wird auf dem Transportgestell abgelegt und das Transportgestell wird aus der Biegestation herausgefahren.

Das Transportgestell weist bevorzug einen Transport-, Kühl- oder Vorspannring auf. Ein spezielles ringförmiges Transportgestell ist erforderlich um eine beidseitige gleichmäßige Kühlung oder Vorspannung zu ermöglichen.

Besonders kurze Taktzeiten lassen sich erzielen, wenn nachdem die Auflageleisten abgesenkt wurden, eine weitere Glasscheibe in die Biegestation eingefahren wird.

In einer vorteilhaften Ausgestaltung des erfindungsgemäßen Verfahrens wird die Glasscheibe nach dem Biegen in eine Kühl- und/oder Vorspannstation transportiert.

Einzelne Gläser für Automobile, Gebäude oder sonstige Einrichtungen müssen aus Gründen der Sicherheit und/oder Festigkeit vorgespannt werden. Vorgespannte Glasscheiben werden auch Einscheibensicherheitsglas genannt. Die thermische Behandlung zur Herstellung vorgespannter Glasscheiben erfolgt in einer sogenannten Vorspannstation, die beispielsweise aus US 2002/0189289 A1 bekannt ist. In der Vorspannstation wird die Glasscheibe schroff abgekühlt. Dies erfolgt durch Aufblasen von Kaltluft auf beide Seiten der erwärmten Glasscheibe.

Der Vorspannvorgang mit anschließender Übergabe erfordert mehr Zeit, als der Biegevorgang. Wenn eine hohe Durchsatzrate für die Glasscheiben gewünscht wird, können mehrere, kreisförmig angeordnete Vorspannringe vorgesehen werden. Eine solche Anordnung wird beispielsweise in DE 10 2004 029 723 B3 beschrieben.

Das erfindungsgemäße Verfahren ist nicht auf das Biegen einer einzelnen Glasscheibe beschränkt. Vorzugsweise können auch mehrere übereinanderliegende Glasscheiben gleichzeitig gebogen werden.

Im Folgenden wird eine Vorrichtung zum Biegen einer auf eine Biegetemperatur von 550 °C bis 680 °C erwärmten Glasscheibe beschrieben.

Die Vorrichtung umfasst eine Biegestation mit einem mindestens zweifach geteilten Biegering, zum Heben der Glasscheibe durch den geöffneten Biegering und zum Stützen der Glasscheibe von unten im geschlossenen Zustand des Biegerings. Des Weiteren umfasst die Biegestation eine Hebevorrichtung mit mindestens einer Auflagefläche. Die Hebevorrichtung dient zum Heben der Glasscheibe durch die geöffneten Teile des Biegerings. Außerdem umfasst die Biegestation eine Biegeform mit Ansaugvorrichtung, zum Ansaugen der Glasscheibe und zum Biegen der Glasscheibe. Die Vorrichtung umfasst drei Arbeitsebenen: einen Transportbereich für den Transport der Glasscheibe in die Biegestation, einen Biegebereich, der über dem Transportbereich angeordnet ist und einen Übergabebereich, der über dem Biegebereich angeordnet ist.

In einer bevorzugten Ausgestaltung der Vorrichtung besteht die Transportvorrichtung, mit der die Glasscheibe durch die Biegestation transportiert wird, aus einem Rollenfördersystem, mindestens einem Trägerzug, mindestens einem Transportgestell oder aus Kombinationen daraus. Das Transportgestell oder der Trägerzug weisen bevorzugt einen Trage-, Kühl- oder Vorspannring auf.

Im Folgenden wird ein Ausführungsbeispiel der Erfindung anhand eines Flussdiagramms und Zeichnungen der einzelnen Verfahrensschritte näher erläutert. Die Zeichnungen sind rein schematische Darstellungen und nicht maßstabsgetreu. Die Zeichnungen schränken die Erfindung in keiner Weise ein.

Es zeigen:
Figur 1 ein Ausführungsbeispiel der erfindungsgemäßen Verfahrensschritte anhand eines Flussdiagramms,
Figur 2A Seitenansicht und Figur 2B Draufsicht, Einfahren der Glasscheibe (1) in die Biegestation,
Figur 3A Seitenansicht und Figur 3B Draufsicht, Positionieren der Glasscheibe (1),
Figur 4A Seitenansicht und Figur 4B Draufsicht, Anheben der Glasscheibe (1) durch eine Hebevorrichtung (3),
Figur 5A Seitenansicht und Figur 5B Draufsicht, Schließen des Biegerings (2.1)(2.2),
Figur 6A Seitenansicht und Figur 6B Draufsicht, Senken der Hebevorrichtung (3) und Ablegen der Glasscheibe (1) auf dem Biegering (2.1)(2.2),
Figur 7A Seitenansicht und Figur 7B Draufsicht, Ansaugen und Biegen der Glasscheibe (1) und
Figur 8A Seitenansicht und Figur 8B Draufsicht, Ausfahren der Glasscheibe (1) aus der Biegestation.

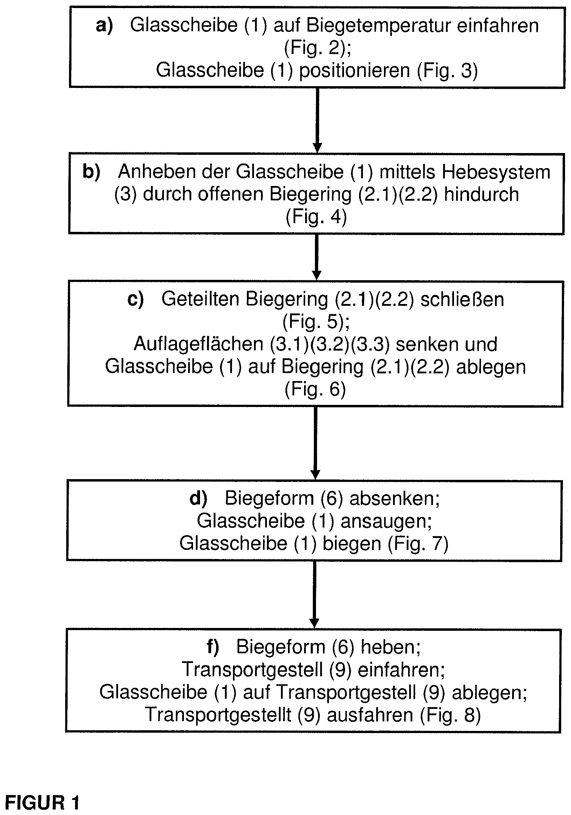

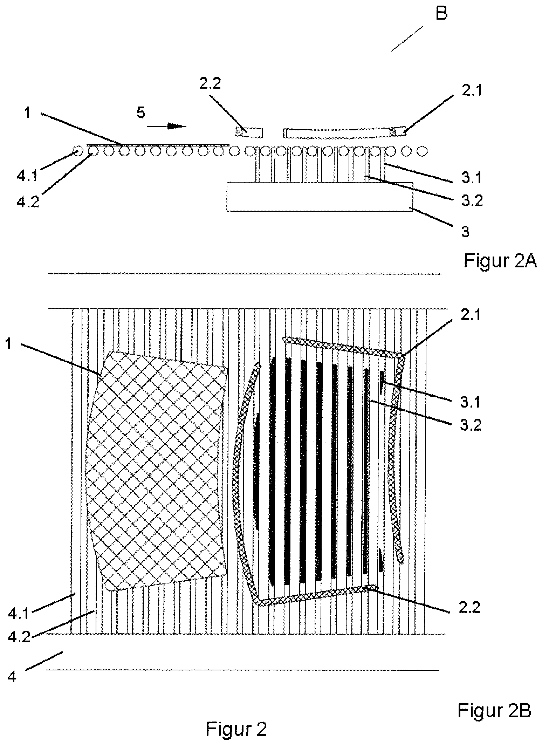

Figur 1 zeigt ein Flussdiagramm der einzelnen Verfahrensschritte des erfindungsgemäßen Verfahrens. Die Figuren 2 bis 8 zeigen in schematischer Darstellung die verschiedenen Verfahrensschritte beim Biegevorgang.

Zunächst wird die Glasscheibe (1) in horizontaler Lage auf einem Rollenfördersystem (4) durch einen Durchlaufofen transportiert. Dabei wird die Glasscheibe (1) auf eine Biegetemperatur von etwa 640 °C erwärmt.

Die Glasscheibe (1) ist beispielsweise eine Floatglasscheibe mit einer Dicke von 3 mm und einer annähernd trapezförmigen Gestalt mit einer Breite von etwa 90 cm, einer Länge von etwa 120 cm an der schmaleren Seite und einer Länge von etwa 150 cm an ihrer längeren Seite.

Figur 2 veranschaulicht das Einfahren der erwärmten Glasscheibe (1) in die Biegestation (B). Zum Transport wird in diesem Beispiel ein Rollenfördersystem (4) mit einer Vielzahl von einzelnen, rotierenden Rollen, wie (4.1), (4.2), (4.3) und (4.4) verwendet. Die Rollen (4.n), wobei n eine ganze Zahl ≥ 1 ist, drehen sich durch einen gemeinsamen Antrieb synchron. Die Glasscheibe (1) fährt horizontal mit einer Geschwindigkeit von 50 mm/s - 500 mm/s in die Anlage in Richtung (5) ein. In der Biegestation befindet sich die Hebevorrichtung (3) in abgesenkter Position. Die Auflageflächen (3.1) oder (3.2) der Hebevorrichtung (3) sind jeweils zwischen zwei Rollen der Transportvorrichtung angeordnet. Der zweifach geteilte Biegering mit den Segmenten (2.1) und (2.2) befindet sich oberhalb der Rollen der Transportvorrichtung und der Glasscheibe (1), beispielsweise in einem vertikalen Abstand von 10 cm über den Rollen. Die Segmente (2.1) und (2.2) des Biegerings befinden sich in einer geöffneten, äußeren Stellung.

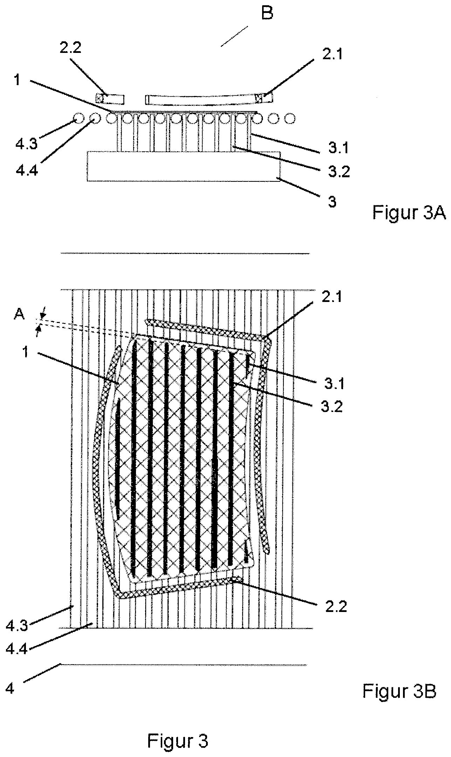

In Figur 3 ist die Glasscheibe (1) in der Biegestation positioniert. Die Positionskontrolle erfolgt beispielsweise mittels Lichtschranken, Ultraschall-Sensoren oder pneumatischer Sensoren. Die Glasscheibe (1) befindet sich über den Auflageflächen (3.1)(3.2). Wie in der orthogonalen Projektion der Draufsicht in Figur 3B zu erkennen ist, befinden sich die gesamten Auflageflächen (3.1)(3.2) der Hebevorrichtung (3) unterhalb der Glasscheibe (1). Außerdem sind alle Auflageflächen (3.1)(3.2) um mindestens einen Abstand A von beispielsweise 5 cm, relativ zur Fläche der Glasscheibe (1) nach Innen versetzt.

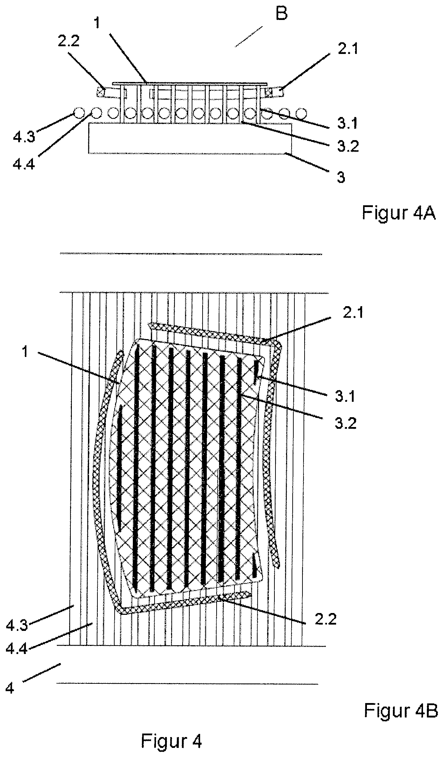

Im folgenden Verfahrensschritt in Figur 4 werden die Auflageflächen (3.1)(3.2) durch die Hebevorrichtung (3) angehoben. Die Glasscheibe (1) durch die Auflageflächen (3.1)(3.2) angehoben und durch den offenen Biegering (2.1)(2.2) hindurch gehoben. Bei diesem Verfahrensschritt kann auch eine Positionskorrektur der Scheibe erfolgen. Figur 4 zeigt die Glasscheibe (1), die sich über dem geöffneten Biegering (2.1)(2.2) befindet.

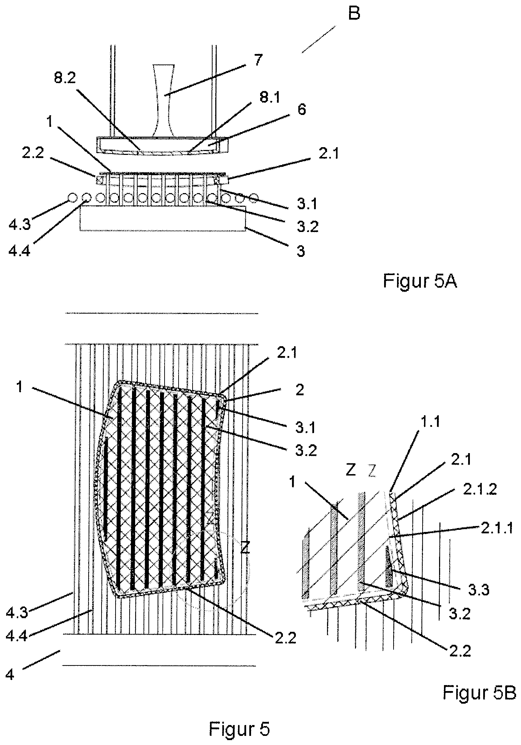

Im folgenden Verfahrensschritt in Figur 5 werden die Segmente des Biegerings (2.1) und (2.2) in ihre geschlossene Stellung gefahren. Wie in Figur 5 dargestellt, ist die Form, Größe und Position der Auflageflächen (3.1)(3.2) derart auf die Glasscheibe (1) abgestimmt, dass bei angehobener Glasscheibe (1) ein Bereich mit einem Abstand A von mindestens 1 cm vom Rand (1.1) der Glasscheibe (1) bis zum Rand der Auflagefläche frei bleibt. Die Segmente des Biegerings (2.1)(2.2) befinden sich in ihrer geschlossenen Stellung in diesen Bereich und unterhalb des äußeren Seitenrandes (1.1) der Glasscheibe (1).

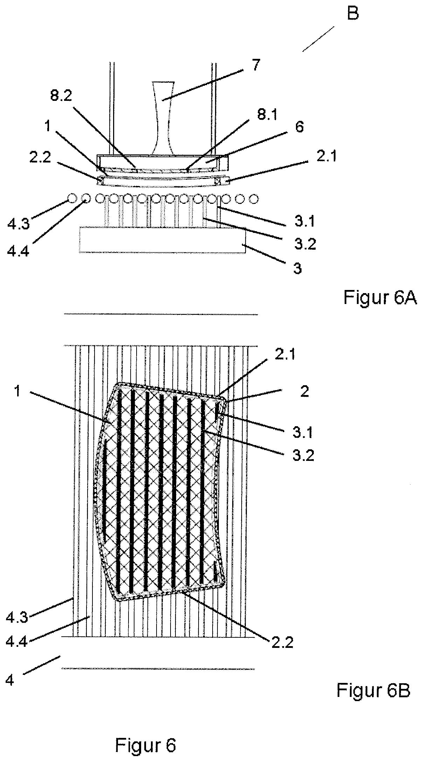

Anschließend werden die Auflageflächen (3.1)(3.2) der Hebevorrichtung (3) abgesenkt, wobei die Glasscheibe (1) vom Biegering (2.1)(2.2) gestützt wird (siehe Figur 6). Aufgrund der Schwerkraft, die auf die erweichte Glasscheibe (1) wirkt und der Unterstützung der erweichten Glasscheibe (1) durch den Biegering (2.1)(2.2) wird die Glasscheibe (1) vorgebogen.

Im nächsten Verfahrensschritt in Figur 6 wird die Biegeform (6) mit der Ansaugvorrichtung (7) abgesenkt. Durch die Ansaugvorrichtung (7) wird ein Unterdruck von etwa 200 Pa zwischen Biegeform (6) und Glasscheibe (1) erzeugt. Dazu ist die Biegeform (6) mit mehreren Ansaugkanälen (8.1) und (8.2) ausgestattet. Durch den Unterdruck schmiegt sich die erwärmte Glasscheibe (1) an die Kontur der Biegform (6) an. Bei mehr als einer Glasscheibe kommt die vorher beschriebene Schürzentechnik zum Einsatz.

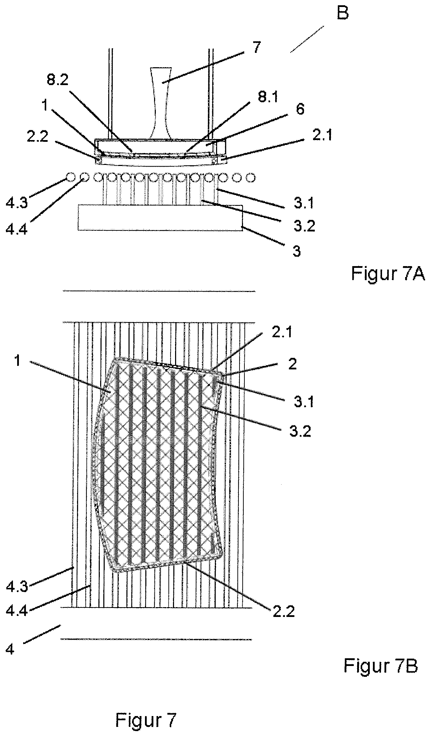

Wie in Figur 7 dargestellt ist, wird die Glasscheibe zusätzlich durch die Biegeform (6) gegen den geschlossenen Biegering (2.1)(2.2) gepresst. Durch die Kombination der zwei Biegeverfahren, Saugen und Pressen, können auch dreidimensionale Biegungen der Glasscheibe (1) erzeugt werden.

Eine Berührung zwischen einer metallischen Form und einer erwärmten Glasoberfläche (1) hinterlässt oftmals Spuren in der Glasoberfläche (1), die deren optische Qualität beeinträchtigen. Deshalb ist die Biegeform (6) mit einer hitzefesten Gewebe-Zwischenlage ausgekleidet, die aus EP 0 767 146 A1 bekannt ist.

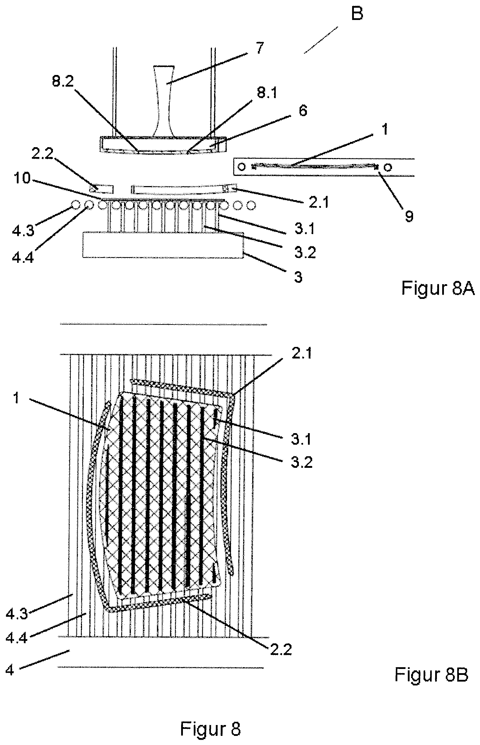

Anschließend wird die Glasscheibe (1) aus der Biegestation ausgefahren. In dem in Figur 8 dargestellten Ausführungsbeispiel wird zunächst die Biegeform (6) samt Glasscheibe (1) angehoben. Ein Transportgestell (9), hier beispielsweise ein Vorspannring, wird in die Biegestation eingefahren und die Glasscheibe (1) durch Belüften der Biegeform auf dem Transportgestell (9) abgelegt. Anschließend wird das Transportgestell (9) mit der Glasscheibe (1) aus der Biegestation (B) ausgefahren und in eine Vorspann- oder Kühlstation überführt.

Während des Biegevorgangs oder während des Ausfahrens der Glasscheibe kann bereits eine weitere Glasscheibe (10) in die Biegestation eingefahren und positioniert werden.

Das erfindungsgemäße Verfahren verkürzt die Taktzeit zum Biegen einer Glasscheibe (1) bei gleichbleibender Qualität erheblich, im Vergleich zu Verfahren nach dem Stand der Technik. Dies gilt insbesondere im Vergleich zu Verfahren mit einem ungeteilten Biegering und einem Anheben der Glasscheibe durch einen Heißluftstrom oder durch eine Saugvorrichtung.

Durch das erfindungsgemäße Verfahren verringert sich die Taktzeit um etwa 3 s, im Vergleich zu einem Verfahren mit horizontal verfahrbarem Biegering. Die elektrische Leistung zur Erzeugung eines Heißluftstroms zum Heben der Glasscheibe beträgt etwa 300 kW. Beim erfindungsgemäßen Verfahren beträgt die elektrische Leistung für das Anheben der Glasscheibe etwa 3 kW.

### Es zeigen:

- (1), (10): Glasscheibe
- (1.1): Seitenrand von (1)
- (2): Biegering
- (2.1): Segment des Biegerings
- (2.1.1): äußerer Rand von (2.1)
- (2.1.2): innerer Rand von (2.1)
- (2.2): Segment des Biegerings
- (3): Hebevorrichtung
- (3.1), (3.2), (3.3): Auflagefläche
- (4): Transportsvorrichtung
- (4.1), (4.2), (4.3), (4.4): Rolle von (4)
- (5): Richtung
- (6): Biegeform
- (7): Ansaugvorrichtung
- (8.1), (8.2): Ansaugkanal
- (9): Transportgestell
- A: Abstand zwischen (1.1) und Auflagefläche
- B: Biegestation
- Z: Vergrößerung des Ausschnitts

## Patentansprüche

1. Verfahren zum Biegen einer Glasscheibe, wobei:
a. mindestens eine Glasscheibe (1) mit einer Temperatur von 550 °C bis 680 °C in einer Biegestation (B) positioniert wird,
b. die Glasscheibe (1) mit einer Hebevorrichtung (3) mit mindestens einer Auflagefläche (3.1) durch geöffnete Segmente (2.1) (2.2) eines mindestens zweifach getrennten Biegerings (2) hindurch gehoben wird,
c. der getrennte Biegering (2) geschlossen und die Hebevorrichtung (3) gesenkt wird, wobei die Glasscheibe (1) von dem Biegering (2) gestützt wird und die Glasscheibe (1) auf dem geschlossenen Biegering (2) vorgebogen wird, und
d. eine Biegeform (6) abgesenkt wird und die Glasscheibe (1) durch Ansaugen an die Biegeform (6) und Pressen der Biegeform (6) gegen den Biegering (2) gebogen wird, wobei der Biegering (2) im geschlossenen Zustand das Profil und die Kontur der gebogenen Glasscheibe (1) aufweist.

2. Verfahren nach Anspruch 1, wobei die Glasscheibe (1) gleichzeitig durch Ansaugen der Glasscheibe (1) an die Biegeform (6) und durch Pressen der Biegeform (6) gegen den Biegering (2) gebogen wird.

3. Verfahren nach einem der Ansprüche 1 bis 2, wobei nach dem Biegen die Biegeform (6) samt Glasscheibe (1) angehoben wird, ein Transportgestell (9) in die Biegestation (B) eingefahren wird, die Glasscheibe (1) auf dem Transportgestell (9) abgelegt wird, die Biegeform (6) angehoben wird und das Transportgestell (9) aus der Vorrichtung herausgefahren wird.

4. Verfahren nach einem der Ansprüche 1 oder 3, wobei nach dem Biegen die Glasscheibe (1) in eine Kühl- und/oder Vorspannstation transportiert wird.

5. Verfahren nach einem der Ansprüche 1 bis 4, wobei mehrere übereinanderliegende Glasscheiben gleichzeitig gebogen werden.

## Claims

1. Method for bending a glass pane, wherein:
a. at least one glass pane (1) is positioned in a bending station (B) at a temperature of 550 °C to 680 °C,
b. the glass pane (1) is lifted by means of a lifting device (3) with at least one support surface (3.1) through opened segments (2.1) (2.2) of a bending ring (2) which is divided at least in two,
c. the divided bending ring (2) is closed and the lifting device (3) is lowered, wherein the glass pane (1) is supported by the bending ring (2), and the glass pane (1) is pre-bent on the closed bending ring (2), and
d. a bending mold (6) is lowered and the glass pane (1) is bent by sucking onto the bending mold (6) and pressing the bending mold (6) against the bending ring (2), wherein the bending ring (2) has, in the closed state, the profile of the bent glass pane (1).

2. Method according to claim 1, wherein the glass pane (1) is simultaneously bent by sucking the glass pane (1) onto the bending mold (6) and by pressing the bending mold (6) against the bending ring (2).

3. Method according to one of claims 1 through 2, wherein after bending, the bending mold (6) is raised together with the glass pane (1), a transport frame (9) is moved into the bending station (B), the glass pane (1) is put down on the transport frame (9), the bending mold (6) is raised, and the transport frame (9) is moved out of the device.

4. Method according to one of claims 1 or 3, wherein after bending, the glass pane (1) is transported into a cooling and / or tempering station.

5. Method according to one of claims 1 through 4, wherein a plurality of superposed glass panes are bent simultaneously.

## Revendications

1. Procédé pour le bombage d'une feuille de verre, dans lequel :
a. au moins une feuille de verre (1) à une température de 550°C à 680°C est positionnée dans une station de bombage (B) ;
b. la feuille de verre (1) est soulevée avec un dispositif de levage (3) ayant au moins une surface de support (3.1) à travers des segments ouverts (2.1) (2.2) d'un anneau de bombage (2) séparé au moins en deux ;
c. l'anneau de bombage séparé (2) est fermé et le dispositif de levage (3) est abaissé, la feuille de verre (1) étant supportée par l'anneau de bombage (2) et la feuille de verre (1) étant prébombée sur l'anneau de bombage fermé (2) ; et
d. une forme de bombage (6) est abaissée et la feuille de verre (1) est bombée par aspiration sur la forme de bombage (6) et pressage de la forme de bombage (6) contre l'anneau de bombage (2), l'anneau de bombage (2) présentant à l'état fermé le profil et le contour de la feuille de verre bombée (1).

2. Procédé selon la revendication 1, dans lequel la feuille de verre (1) est bombée simultanément par aspiration de la feuille de verre (1) sur la forme de bombage (6) et par pressage de la forme de bombage (6) contre l'anneau de bombage (2).

3. Procédé selon l'une des revendications 1 à 2, dans lequel, après le bombage, la forme de bombage (6) est relevée avec la feuille de verre (1), un châssis de transport (9) est rentré dans la station de bombage (B), la feuille de verre (1) est déposée sur le châssis de transport (9), la forme de bombage (6) est relevée et le châssis de transport (9) est ressorti du dispositif.

4. Procédé selon l'une des revendications 1 ou 3, dans lequel, après le bombage, la feuille de verre (1) est transportée dans une station de refroidissement et/ou précontrainte.

5. Procédé selon l'une des revendications 1 à 4, dans lequel plusieurs feuilles de verres superposées sont bombées simultanément.
